# EUROPEAN PATENT APPLICATION

(11) **EP 4 353 351 A1**
(43) Date of publication of application: **17.04.2024**
(21) Application number: 22306529.3
(22) Date of filing: 11.10.2022
(51) Int. Cl.: B01J 19/08, B01J 8/02, B01J 12/00, B01J 19/24

(54) **ELECTRICAL REFORMING REACTOR FOR REFORMING A FEED GAS COMPRISING HYDROCARBONS**

(71) Applicant: Technip Energies France, 92741 Nanterre Cedex (FR)
(72) Inventor: WANDERS, Mark, 92741 NANTERRE CEDEX (FR); YOUSEFI AFROOZ, Alireza, 92741 NANTERRE CEDEX (FR)
(74) Representative: McWilliams, David John

(57) **Abstract**

Reforming reactor for reforming a feed gas comprising hydrocarbons, comprising an outer tubular vessel (25) containing at least one structured catalytic module comprising:
• A structured catalyst (1) having an open tubular shape with two axial parallel edges and a concertina structure, and comprising at least one electrically conductive material supporting at least one catalyst,
• At least two electrical conductor members (5a) and (5b) arranged along the two axial edges of the structured catalyst, and
• At least a first electrical insulation member (11) arranged between the conductor members for electrically insulating them from each other.

## Description

The invention is related to electrical reforming reactor for reforming a feed gas comprising hydrocarbons, an electrical reforming unit comprises several electrical reforming reactors and a reforming process implementing electrical reforming units.

Fired reforming reactors for steam methane reforming, such as a fired steam methane reformer or a fired convective reformer, typically use large amounts of fuel to supply heat for the steam methane reforming reaction. In the case of a fired steam methane reformer (SMR), fuel is imported directly to a fired side of the SMR and burned to provide radiant heat for tubes of the SMR, whilst excess heat in the flue gas of the fired side of the SMR is typically utilized in a waste heat section of the SMR. In the case of a convective reformer or convective reforming reactor, fuel is led to a burner which generates a flow of a hot flue gas. An enclosure forms a convective channel or convection chamber that allows flue gas from the burner to flow over tubes of the convective reformer housing catalyst.

The steam reforming reaction is highly endothermic. High temperatures typically in excess of 800-850°C are needed to reach acceptable conversions of the methane in the feed.

Climate change and ongoing energy transition make it mandatory to replace fossil carbon- based fuels in chemical production and recycled processes with a more environmentally friendly decarbonized source of energy. Transforming natural gas into valuable chemicals requires elevated temperature, often higher than 800°C and even up to 1000°C and are often endothermic. The energy needed is, therefore, high and not often environmentally friendly, as is demonstrated by the common use of fired heated reactors. Several studies have been undertaken to reduce the burden imposed by these (harsh) reaction conditions.

In the study of Wismann S.T. et al., entitled "Electrified methane reforming: A compact approach to greener industrial hydrogen production " ( Science , 2019, 364, 756-759), a conventional fired reactor was replaced by an electric-resistance-heated reactor.

The electrified reformers can be divided into two main categories in terms of how electrical heating is delivered to the reforming reaction.

The first category comprises of a separate electrical heating element and a reaction chamber containing the catalyst and other reactor internals or a catalyst supporting/holding wall. The electrical heating element may be embedded inside the catalyst bed OR wrapped/coiled around a tube or another form of a pressure vessel to deliver heat flux through a wall while is electrically insulated from the electrically conductive parts of the reactor to direct and maintain electrical current inside the electrical element. It is relatively less complicated to replace conventional fuel burning heating system with an electrical heating system however the main challenge of significant temperature gradient and heat loss between the heat source and sink remains unsolved.

In the second category, the catalyst supporting wall/medium and electrical element are the same item. For example, the electrically conductive wall/medium current may be connected to electrodes and may be heated up by the passage of electrical currents through it. The heat is then immediately delivered to the catalyst which is either coated over the wall/element like an internal lining is filled inside the volume surrounded by the said wall. In another example the use of magnetic susceptible material may allow to heat up by induction the specific material on which (or at proximity of which) the catalytic active material is located (for instance by coating technology). The principle has been experimentally validated and reported in the literature (P.M. Mortensen et al. Ind. Eng. Chem. Res. 2017, 56, 14006-14013) The main advantage of the second category is to eliminate almost entirely the temperature gradient (and thereby removing any resistance to heat transfer) between source and sink as heating wall and reaction site are geometrically attached to each other or are extremely close.

The solutions according to the prior art are more suitable for new installations and could not be used for revamp of the existing fired reformers into electrical ones.

The other issues we notice in the solutions according to the prior art are:
- The energy losses between the heat sources and reaction sides on the catalyst,
- Electrical current distribution issues,
- Conducting of the current in heterogenous manner.

The present invention aims to overcome these drawbacks and provide a reforming reactor for reforming a feed gas comprising hydrocarbons.

A solution of the present invention is an electrical reforming reactor for reforming a feed gas comprising hydrocarbons, comprising an outer tubular vessel 25 containing at least one structured catalytic module comprising:
- A structured catalyst 1 having an open tubular shape with two axial parallel edges and a concertina structure, and comprising at least one electrically conductive material supporting at least one catalyst,
- At least two electrical conductor members 5a and 5b arranged along the two axial edges of the structured catalyst, and
- At least a first electrical insulation member 11 arranged between the conductor members for electrically insulating them from each other.

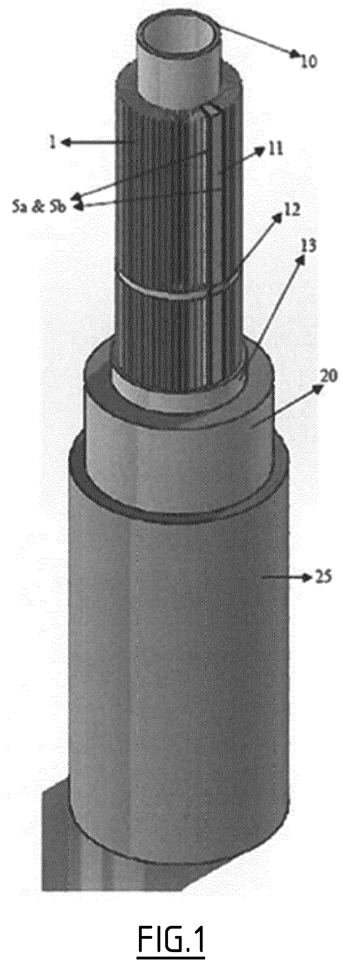

The Figure 1 illustrates the reforming reactor according to the present invention.

The expression "arranged between the conductor members" means the first electrical insulation member is sandwiched between the conductor members, i.e. the structured catalyst, the two electrical conductor members and the first electrical insulation member form a tubular module.

The expression "concertina structure" means a structure comprising sheets zigzag-shaped folded. The space between the pleats of the concertina structure is comprised between 2 and 6 mm, typically 4 mm for concertina structure with an outside diameter of 114 mm and 90 pleats. And the thickness of the pleats is comprised between 80 and 160 microns.

The two electrical conductor members are arranged along the two axial edges of the structured catalyst. In other words, the two electrical members are parallel to the main axis of the tubular vessel.

Depending on the embodiment, the electrical reforming reactor according to the present invention can comprise one or more of the following features:
- the outer tubular vessel comprises several structured catalytic modules, superimposed, electrically connected in series and isolated from each other by a second electrical insulation member 12.
- the structured catalytic module(s) comprises a third electrical insulation member 13 arranged around its external surface.
- the reforming reactor comprises a thermal insulation member 20 arranged between the outer tubular vessel and the structured catalytic module(s).
- the structured catalytic module(s) comprises an inner hollow volume comprising a tubular fourth electrical insulation member 10, preferably the peripheral wall of the tubular fourth electrical insulation member is in contact at least in part with the inner wall of the structured catalytic module(s).
- the tubular fourth electrical insulation member is gas tight and is configured to allow the circulation of a reformed gas inside the tubular member.

The reforming reactor according to the present invention can be used to replace conventional fossil fuel firing endothermic heterogenous gaseous phase reactors such as steam-methane reformers - to produce hydrogen, syngas and alike - in both brownfield and greenfield applications. The electrical reactor can utilize electricity including renewable electricity - sourced from wind, solar, geothermal, wave, hydropower, biogas, and biomass - to provide the total required heat to enable the endothermic reaction up to desired conversion of the feed molecules to product ones.

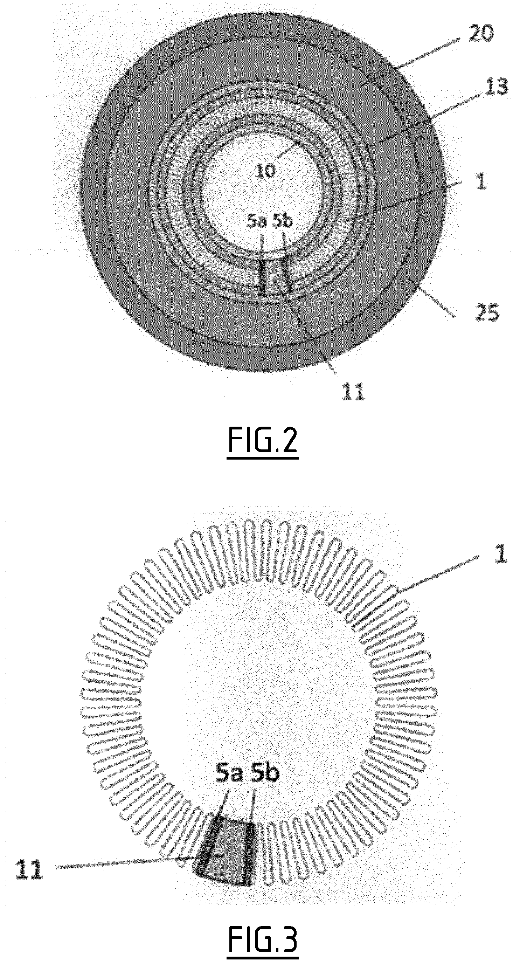

The Figure 2 illustrates the cross-section view of one structured catalytic module including structured catalyst 1, electrical conductor members 5a and 5b, electrical insulation members 11, 13, 10 and thermal insulation member 20, and outer tubular vessel 25.

The Figure 3 illustrates the cross-section view of only the structured catalyst 1, two electrical conductor members 5a and 5b and the electrical insulator member 11 between the electrical conductor members.

The Figure 4 illustrates the main embodiment of the invention with electrical current flow (grey arrows) direction and process gas flow directions (black arrows).

The electrical power is converted to heat by ohmic (resistive or joule or impedance) heating of the catalyst-holding medium 1. The catalyst-holding medium is constructed from an electrically conductive, high-temperature resistant metal alloy material (or ceramic) with excellent manufacturability characteristics. The said characteristics enables the catalyst-holding medium to be manufactured in concertinaed shape.

The structured catalyst 1 is connected to two longitudinal electrical conductors 5a and 5b arranged along the two axial edges of the structured catalyst 1 - parallel to the medium axial line. The said conductors are insulated from each other by means of the first electrical insulation member 11 therefore the incoming electric current flux from positive electrode is distributed evenly across the length of catalyst-holing medium and runs through it until it is collected by the negative electrode at the other end and directed to the next modules which can be located on its top or bottom depending on where the electrical mains are connected to the reactor. The modules are isolated from each other by means of a second electrical insulation member 12.

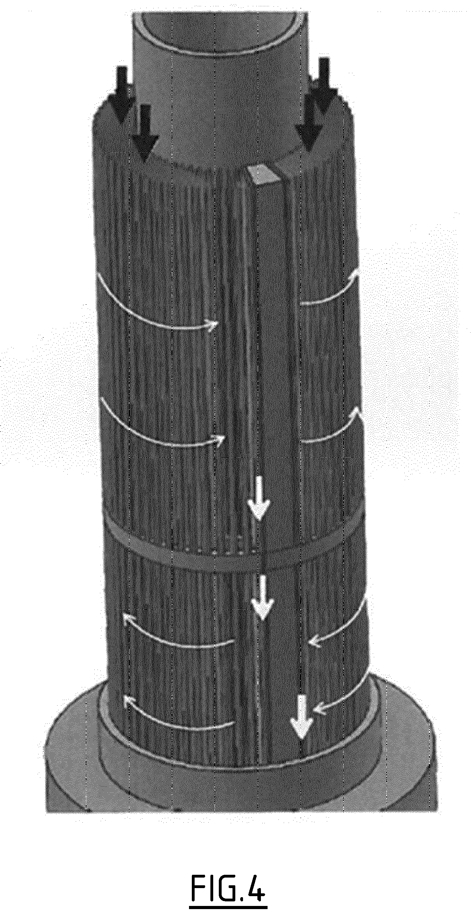

The catalytic modules are electrically connected circumferentially in series. The electrical current follows a path around the module and then to the next one in series located above (or below depending how modules are arranged) where it follows the same circumferential path around the module and along its full length. All the modules are inside the same tubular vessel 25 (figure 4).

Each module is separated from the next one by an electrical insulation 12 located between them. A tubular fourth electrical insulation member is installed inside internal surface of the module to ensure pleat tips of the concertinaed structure are maintained at certain distance from each other and short-circuiting is totally avoided. A third electrical insulation member 13 is also applied around the external surface of the modules to ensure it is isolated from external parts as well as avoiding short-circuits in the modules by way of adjacent pleat tips of the concertina structure attaching. The entire arrangement is then located inside a thermal insulation member 20 and then inside a pressure outer tubular vessel 25.

The feed gas enters the reactor tube from top or bottom depending on the chosen reactor configuration and passes perpendicularly through structured catalytic modules. The passage of feed gas in the tubular fourth insulation member 10 is completely avoided.

The catalyst is applied on both sides of the open tubular shape with a concertina structure as a thin layer by means of wash coating method. The number of modules "n" and hence the tubular vessel length are determined based on desired reaction conversion, total capacity, and number of reforming reactors.

Another object of the present invention is an electrical reforming unit for reforming a feed gas comprising hydrocarbons comprises several electrical reforming reactors as defined in the present invention.

Depending on the embodiment, the electrical reforming unit according to the present invention can comprise one or more of the following features:
- the electrical reforming unit comprises two conductor members of electrical current connected to the reforming reactors.
- the electrical reforming unit comprises on its inner surface a refractory layer.
- the electrical reforming unit comprises:
   - One lower chamber 111 and one upper chamber 115, with the upper chamber being arranged above the lower chamber 111 in used,
   - An airtight member and an electrical insulation member arranged between the lower chamber 111 and the upper chamber 115,
   - Several electrical reforming reactors as defined in the present invention, with the lower outlets of the reforming reactors opening into the lower chamber 111 and the upper outlets of the reforming reactors opening into the upper chamber 115, and
      With the electrical reforming reactors comprising inlet holes of feed gas on its peripheral wall configured to supply the catalytic modules of the reforming reactors with the feed gas existing in the lower chamber, and outlet members (inlet holes) of reformed gas configured to restitute in the upper chamber 115 the reformed gas circulating inside the tubular members of the reforming modules,
   - An inlet of the feed gas in the lower chamber, and
   - An outlet of the reformed gas arranged in the wall of the upper chamber 115.
- the electrical reforming unit comprises, as conductor members of electrical current, two sheets with a cylindrical shape:
   - A first sheet between the lower chamber 111 and the upper chamber 115,
   - A second sheet arranged in the top of the upper chamber 115;
      these sheets being connected to the reforming reactors, preferably by welding.
- each sheet is comprised between two rings of insulation material.
- the lower chamber 111 comprises at least one baffle member configured to minimize the flow of feed gas to the bottom of the lower chamber.

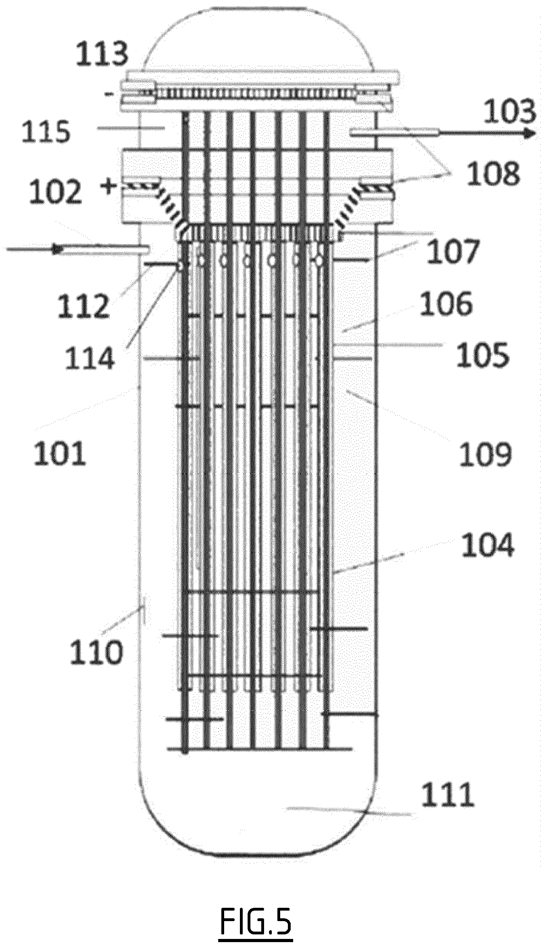

The figure 5 illustrates a reforming unit according to the present invention.

In one of the possible configurations the feed gas flows into the lower chamber 111 of the reforming unit under pressure through the inlet 102. This operating pressure might vary on external conditions and can range from 5 bar to 80 bar. Inlet temperatures may range from environmental temperature up to 550°C which is typical for pre-reformed feed. The feedstock gas may be pre-treated for impurity removal and heavy hydrocarbon pre-reforming in dedicated upstream equipment or even already partially reformed in a downstream the reactor, and steam is added to the feedstock in order to condition the feed gas for the reforming reaction. Then the feed gas flows into the catalytic modules of the reforming reactors 105 via inlet holes 114 on the peripheral walls of the reforming reactors. The reformed gas exits the reforming reactors at the opposite end of the tubular vessels, i.e. in the end of the lower chamber. The reformed gas flows to the end of the lower chamber 111, where it is mixed eventually with low amounts of feed gas having by passed the bundle of tubular vessels, in the interstitial space of the bundle 106. The by-pass is minimized by using baffles 109 and 107 assembly that act as support for the bundle. Further the mixed reformed gas enters in the tubular fourth electrical insulation members of the reforming reactors and flows back to the upper chamber 115 of the reforming unit, while exchanging heat in a convective heat exchange with the feed gas. This heat exchange allows to decrease the heat duty of the reforming process (Up to 20% is possible) and is also called recuperative reforming. The mixed reformed gas exits the reforming unit at the outlet 103. In a preferred configuration the tubular vessels of reforming reactors are connected (by welding) to a second sheet 113 that serves as a conductor of electrical current which is placed at a distance from a first sheet 112 to which the tubular vessels are connected, which also serve as a current conductor. Bothe sheets are designed such that they can be connected to the external supply of current, for instance by fitting the sheet support between two rings of insulator material 108. The first and the second sheets 112 and 113 are connected to electrical structure from outside the reforming unit and are configured such that short circuit is avoided. The pressure vessel of the reforming unit 101 is internally insulated by a refractory layer 110 consisting dense refractory that is highly thermal insulator. The shell of the vessel is made from low alloy material and its thickness is determined as a function of the pressure and temperature.

The main advantages of the Invention are as follows:
- The energy losses between the heat sources - catalyst-holding medium - and heat sink - reaction sites on the catalyst - is reduced significantly compared to a conventional tubular fired box reactor and electric heated furnaces in the traditional manner (with resistive heating placed in a radiant box,
- The compact space (millimetric) between pleats of the concertina structure of the catalyst brings feed gas and catalyst in close contact creating an ideal condition for faster overall reaction rate by almost eliminating the mass and heat transfer resistances. Advantageously the selection of the shape of the catalyst support allows to obtain a very low pressure drop, thereby enabling a significant increase of the productivity of the reactor compared to alternative fired reformers, the presence of both high catalyst surface density and low resistance to flow allowing the usage of a high flow rates.
- The disclosed invention allows for the design of catalyst support structure having a lower thickness (circa 5 times) than alternative design proposed by Haldor Topsoe in the document WO2019228797, which increases the produced heat per unit length of the structure. The lower structure thickness also improves the current distribution inside structure resulting in a homogenous heat generation by structure.
- The catalyst support structure is connected to the electrical source by conductor members arranged along the axial edges of the structured catalyst. These conductor members are arranged to direct the current along the structured catalytic modules. So, these conductor members improve distribution of electrical current along the structured catalyst. The alternative design proposed in the document WO2019228797 uses point electric connections which results in electrical current distribution issues. This prior solution is to use horizontal and longitudinal slits in the catalyst supporting structure (monolith shape) which based on presented results seems to be not fully effective to resolve the issue. The approach proposed by the present invention provides therefore more flexibility by connecting heating elements in series, mimicking modular assemblies.
- Considering flexibility of the catalyst support structure of current invention, various designs could be realized. This is a significant advantage compared to the prior solution where electrical resistor/support structure has a rigid shape. The structure flexibility provides a higher manufacturability as per current invention.
- The main advantage of current invention compared to the solution described in the document US20170130887 is that heat is directly delivered to the catalyst and process gas with significant heat loss reductions whereas in the solution proposed in the document US20170130887, resistive heat is produced outside reaction chamber (pipe/vessel) and heat transferred through the reactor wall producing a higher temperature gradient compared to current invention.
- The scale up could be achieved by increasing the number of modules per tubular vessel and the tubular reforming reactors in an arrangement quite similar to a conventional tubular fired box reactor without the need for keeping spacings between tubular reforming reactors - governed by thermal design of radiative box - as followed in a conventional reactor (e.g. conventional SMR). In current invention, the tubular pressure parts can be installed closer to each other which results in a more impact installation.
- Alternatively, an assembly of tubular reactors may be located in a pressure vessel (reforming unit), allowing the most compact configuration related to the disclosed invention.
- The current invention could be an ideal solution not only for a new reactor but also for electrifying an existing reactor by scrapping the combustion air and fuel gas systems and replacing it with necessary auxiliary systems for an electrical reactor (transformers etc).
- The tubular reforming reactor in this invention could be chosen from a less exotic cheaper material as it is possible to apply refractory/thermal insulation lining on the internal surface of the tubular pressure part. This helps with reducing reactor capital cost quite significantly.
- Compared to alternative compact electric reactors, the use of modules is advantageous due to: 1) ease of routing the current in a homogenous manner, 2) modules easily produced by conventional techniques, as well as the concertina catalytic structure which is proven in large commercial applications, 3) the differential thermal expansion between the heated component and tubular envelope may be accommodated by relative simple mechanical design practice, as opposed to expansion of plates or microchannels.

## Claims

1. Electrical reforming reactor for reforming a feed gas comprising hydrocarbons, comprising an outer tubular vessel (25) containing at least one structured catalytic module comprising:
- A structured catalyst (1) having an open tubular shape with two axial parallel edges and a concertina structure, and comprising at least one electrically conductive material supporting at least one catalyst,
- At least two electrical conductor members (5a) and (5b) arranged along the two axial edges of the structured catalyst, and
- At least a first electrical insulation member (11) arranged between the conductor members for electrically insulating them from each other.

2. Electrical reforming reactor according to claim 1, wherein the outer tubular vessel comprises several structured catalytic modules, superimposed, electrically connected in series and isolated from each other by a second electrical insulation member (12).

3. Electrical reforming reactor according to claim 1 or claim 2, wherein the structured catalytic module(s) comprises a third electrical insulation member (13) arranged around its external surface.

4. Electrical reforming reactor according to any one of claims 1 to 3, comprises a thermal insulation member (20) arranged between the outer tubular vessel (25) and the structured catalytic module(s).

5. Reforming reactor according to any one of claims 1 to 3, wherein the structured catalytic module(s) comprises an inner hollow volume comprising a tubular fourth electrical insulation member (20).

6. Electrical reforming reactor according to claim 5, wherein the tubular fourth electrical insulation member (10) is gas tight and is configured to allow the circulation of a reformed gas inside the tubular member.

7. Electrical reforming unit for reforming a feed gas comprising hydrocarbons comprises several electrical reforming reactors as defined in one of claims 1 to 6.

8. Electrical reforming unit according to claim 7, wherein it comprises two conductor members of electrical current connected to the reforming reactors.

9. Electrical reforming unit according to claim 7 or claim 8, wherein it comprises on its inner surface a refractory layer.

10. Electrical reforming unit according to any one of claims 7 to 9, wherein it comprises:
- One lower chamber (111) and one upper chamber (115), with the upper chamber (115) being arranged above the lower chamber (111) in used,
- A airtight member and an electrical insulation member (108) arranged between the lower chamber (111) and the upper chamber (115),
- Several reforming reactors as defined in claim 6, with the lower outlets of the reforming reactors opening into the lower chamber (111) and the upper outlets of the reforming reactors opening into the upper chamber (115), and
With the reforming reactors comprising inlet holes of feed gas on its peripheral wall configured to supply the catalytic modules of the reforming reactors with the feed gas existing in the lower chamber, and outlet members of reformed gas configured to restitute in the upper chamber the reformed gas circulating inside the tubular members of the reforming modules,
- An inlet (102) of the feed gas in the lower chamber (111), and
- An outlet (103) of the reformed gas arranged in the wall of the upper chamber (115).

11. Electrical reforming unit according to claim 10, wherein it comprises, as conductor members of electrical current, two sheets with a cylindrical shape:
- A first sheet (114) between the lower chamber (111) and the upper chamber,
- A second sheet (113) arranged in the top of the upper chamber (115);
these sheets being connected to the reforming reactors, preferably by welding.

12. Electrical reforming unit according to claim 11, wherein each sheet is comprised between two rings of insulation material.

13. Electrical reforming unit according to claim 11 or claim 12, wherein the lower chamber comprises at least one baffle member configured to minimize the flow of feed gas to the bottom of the lower chamber.

14. Reforming process of a feed gas comprising hydrocarbons, implementing an electrical reforming unit as defined in one of claims 7 to 13 and comprising:
a) A feeding step of the reforming unit with the feed gas,
b) A step to supply electrical power to the electrical conductor members of the electrical reforming reactors;
c) A reforming step of the feed gas in the structured catalyst of the reforming reactors;
d) A recovering step of a reformed gas.

15. Reforming process according to claim 14, wherein the reforming unit is as defined in one of claims 10 to 13, the feeding step comprises a sub-step to feed the lower chamber with the feed gas and a sub-step to feed the catalytic modules of the reforming reactors with the feed gas existing in the lower chamber (111).

16. Reforming process according to claim 14 or claim 15, wherein the recovering step comprises a sub-step of circulation of a reformed gas inside tubular members of the reforming reactors.
